# EUROPEAN PATENT APPLICATION

(11) **EP 4 451 688 A1**
(43) Date of publication of application: **23.10.2024**
(21) Application number: 23185655.0
(22) Date of filing: 14.07.2023
(51) Int. Cl.: H04N 21/432, G11B 27/10, G11B 27/34, H04N 5/765, H04N 21/433, H04N 21/472, H04N 21/8547, H04N 21/8549, G11B 27/32, G06Q 30/02

(54) **SYSTEM AND METHOD FOR TAGGING AND TRANSFORMING LONG FORM STREAMED VIDEO CONTENT INTO USER IDENTIFIED VIDEO SEGMENTS AND CONTENT CUES FOR SERVICES**

(30) Priority: 18.04.2023 US 202363496869 P
(71) Applicant: Sufuentes, Joaquin, Portland, OR 97210 (US); Tankoua Kwimi, Franck, 67100 Strasbourg (FR)
(72) Inventor: Sufuentes, Joaquin, Portland, OR 97210 (US); Tankoua Kwimi, Franck, 67100 Strasbourg (FR)
(74) Representative: Schulz Junghans Patentanwälte PartGmbB

(57) **Abstract**

The invention relates to a method for selection of a video section in a video stream comprising the following steps:
- transmitting a video to a viewing device,
- receiving and buffering video frames of the video on a memory device of a viewing device (110),
- streaming a video from the memory device via a video player application (120) to the viewing device (110) that displays the video, wherein the video player application (120) is configured to read out the video frames of the video from the memory device (115) and to cause the viewing device (110) to display the video frames of the video,
- receiving a user input on a user interface (170) at a selection time, wherein the user input is processed such that input data comprising a selection request and an input time reference is generated,
- transmitting the input data to a processor or a processor system executing computer program code (190, 215, 225), configured
a) to record and associate for each video frame a screening time reference, indicative of a time when the video frame has been on display on the viewing device;
b) upon receiving the selection request, to determine at least one key video frame that has been displayed on the viewing device at the selection time by determining the video frame associated to the screening time reference that is closest to the input time reference,
c) to select a video section comprising a plurality of video frames preceding and/or following the at least one key video frame, such that the video section corresponds to a video section that has been displayed on the viewing device in a time interval comprising the selection time,
d) to generate a separate video file comprising from the video only the selected video section.

## Description

The invention relates to a method for selection of a video section in a video stream.

The mapping of a spectator's sentiment driven highlighted content at in-person attended events with the video from that event is managed by triangulating a network time to synchronize a user device at the event with the device recording the event (see for example EP 3306495 A1). The system and method of the prior art is being extended in the current disclosure to capture a sentiment from individual viewers in an audience that may have a single or multiple screens for viewing broadcast or live streamed events whose video feed may be time displaced from the real time of the event being recorded. Real time viewing of an event is subject to delays from the recording device to the server system streaming or broadcasting the event to a TV, PC, tablet or smartphone. Delays may even be introduced from the buffer on a system to the video player on the same PC, TV or mobile device being viewed. In the streaming scenario, it is challenging to synchronize a viewer's eye for a good moment, play or video segment to the video itself when the video might have a different origination time at event, rebroadcast time at streaming or broadcast server and on the buffer and application being used on the local screen at the time of presentation wherein the viewer sees the video content.

An object of the present invention is to provide a method that allows for a selection of a video section of a video displayed on a viewing device by a user via an interface device. particularly wherein the interface device may be a separate device from the viewing device. The object is achieved by the method having the features of claim 1.

Advantageous embodiments are described in the dependent claims.

According to the invention a method, particularly a computer-implemented method for selection of a video section in a video stream comprises the following steps:
- particularly recording a video with a recording device,
- transmitting a video to a viewing device,
- receiving and buffering video frames of the video on a memory device, particularly a non-transitory memory device, of the viewing device,
- streaming a video from the memory device via a video player application to the viewing device that displays the video, wherein the video player application is configured to read out the video frames of the video from the memory device and to cause the viewing device to display the video frames of the video,
- receiving a user input on a user interface at a selection time, wherein the user input is processed such that input data comprising a selection request and an input time reference is generated,
- transmitting the input data to a processor or a processor system executing computer program code, that executes the following steps or is at least configured

a) to record and associate for each video frame a screening time reference, indicative of a time when the video frame has been on display on the viewing device;
b) upon receiving the selection request, to determine at least one key video frame that has been displayed on the viewing device at the selection time by determining the video frame associated to the screening time reference that is closest to the input time reference,
c) to select and particularly to generate a video section comprising a plurality of video frames preceding and/or following the at least one key video frame, such that the video section corresponds to a video section that has been displayed on the viewing device in a time interval comprising the selection time, particularly i.e. when the user input has been received at the user interface,
d) to generate a separate video file comprising from the video only the selected video section.

The invention allows for a user or viewer of a video stream to interactively generate a video section with an associated video file, e.g. for sharing on a social media channel or other distribution channels. Further, it allows for a user to store the video file on a computer for revisiting the video section.

In a typical setting the viewing device may be a separate device from the user interface, and may not be comprised by a device that houses both, the viewing device and the user interface. For example, the viewing device may be a TV, or a smart TV, and/or wherein the user interface may be comprised in a mobile phone.

Further, the user interface may not be a remote-control device forming a system with the viewing device.

Particularly, the user interface and the viewing device are operating non-synchronized, i.e. each device operates on its own clock.

The video application may be configured to cause the viewing device to display the video frames of the video ordered as recorded. As the video frames of the video stream may be received on not in the chronological order as recorded, the video application may be configured to provide the video frames to the viewing device in an ordered fashion. The video application may comprise encoders and decoders for processing the video frames.

The computer program code may be added to the video player application, the viewing device and/or the user interface such that the method according to the invention may be performed.

The computer program code in essence provides a piece of connectivity between the user interface and the viewing device such that the video section that has been on display on the viewing device may be identified despite the user interface and the viewing device being agnostic to each other without the computer program code.

The computer program code constitutes a computer program, that may be executed in combination with other computer program code. The computer program code may be executed one or more processors that may or may not be part of the same computer.

According to another embodiment of the invention, the computer program code is loaded on a memory device, connected to the processor or the processor system, such that the computer program can be installed as an add-on to an existing viewing system, having a viewing device and a user interface.

The invention foresees that the processor or system of processors executing the computer program code may be located in various locations depending on the specific embodiment, some of which are disclosed in following embodiments.

The video is typically transmitted to the viewing device via a server hosting or acting as a proxy for the video stream.

The video is at least partially stored on the memory device, i.e. at least some of the frames comprised in the video are stored on the memory device, which is referred to as "buffering" in the context of the current specification.

The video application has access to the memory device and therefore may order the video frames when the video is received or when the video is up for display.

The term "access" in the context of the current specification particularly refers to a hardware component and/or a software component being configured and adapted to exchange data and/or signals, such as to write and/or read data or signals on another component to which the hardware and/or software component has access to.

The user input is received on the user interface. While the input can comprise a variety of different kinds of inputs, e.g. vocal, voice, sound, haptic, gesture input or other, each input is associated an input time reference, that reflects the selection time. While the selection time may be understood as an "absolute" or "true" time, the input time reference depends on a clock, which may be the component's, here e.g. the user interface's clock.

The term 'user input' may also be referred to as 'sentiment cue', or 'user sentiment' in the context of the current specification.

While the viewing device and/or the video player application may rely on a different clock, it may be one task of the invention to synchronize or at least relate the two clocks of the user interface and the clock from the video player application or the viewing device. Once the time of these clocks is related to each other in a known fashion the video frame(s) on display at the selection time may be identified.

The computer program code is configured to facilitate this task. In order to do so, the computer program code determines the screening time reference that is indicative of the time of display for each video frame.

According to another embodiment of the invention, the user interface transmits the input data via a server or via an external receive attached to the viewing device, to the computer program. This embodiment particularly excludes any remote-control systems with a TV, video player and an associated remote control.

According to another embodiment of the invention, for determining the at least one key video frame, the screening time reference and the input time reference are synchronized and/or related to a time of a common clock, such that an offset between a time of a clock providing the screening time reference and a time of clock providing the input time reference is accounted for in step b) of the method, particularly wherein the common clock is provided by a server network time.

This embodiment allows for the computer program to identify the frame on display with higher accuracy, such that the video section comprising the key frame may be selected with higher fidelity.

Methods for synchronizing time references in video streaming systems are for example known from EP 3306495, Sufuentes et al.

According to another embodiment of the invention, the video is stored on a proxy server, particularly wherein the proxy server transmits the video to another server and/or the viewing device.

The term proxy server may be understood as common in the art. Typically, a proxy server may not be located at the location of the viewing device.

According to another embodiment of the invention, the computer program code is comprised by and/or has access to the video player application, wherein particularly for executing step a) the computer program code determines a processing time reference for each video frame, wherein the processing time reference corresponds to a time at which the video player application processes the video frame for display and wherein the computer program code assigns said processing time reference to the screening time reference.

Particularly, the processor or a portion of the processor system is located and/or comprised at the viewing device. Such a viewing device may be a smart-TV. According to this embodiment the computer program code in essence has access to the video player application such that the processing time reference may be obtained, which is a direct measure of the screening time reference.

This embodiment allows for a direct determination of video frames that have been processed to be displayed on the viewing device. Therefore, this embodiment allows for a precise determination of the selection time.

According to another and alternative embodiment of the invention, the computer program code and particularly the processor or a portion of the processor system is comprised by the viewing device and/or has access to a display or a graphic processing unit of the viewing device and particularly no access to the video player, wherein the computer program code particularly continuously determines the video frame that is currently on display of the viewing device.

This embodiment may be selected, when there is no access to the video player application. Then, the computer program code may in essence comprises a frame grabber application that determines the video frame on display.

According to another embodiment of the invention, the computer program code determines a display time reference for each video frame, wherein the display time reference corresponds to a time at which the video frame has been on display and wherein the computer program code assigns said display time reference to the screening time reference.

According to another embodiment of the invention, the computer program code transmits the video frame on display to the proxy server and particularly to the proxy server that transmits the video to the viewing device, wherein on the proxy server the video frame on display transmitted by the computer program code is identified in the video stored on the proxy server, e.g. by means of an image recognition method, wherein from the video stored on the proxy server the at least one key frame as well as the video section are determined.

According to this embodiment that computer program code may comprise a frame grabber that is configured to record the frame on display. While this embodiment employs a less direct way of accessing the video content it may be advantageous in systems that do not provide access to the video player application, and/or the memory. As recognition methods have been increasingly improved, this embodiment offers a feasible way of upgrading an existing viewing device.

According to another embodiment of the invention, the computer program code is stored and executed on a repeatedly connectable software device comprising the processor or a portion of the processor system, wherein the software device is connected to the viewing device via an interface port connector assembly, and/or wherein the viewing device comprises the processor or a portion of the processor system.

This embodiment allows for a portable embodiment of the invention, wherein the software device, also referred to as dongle in the current specification, may be connected to the viewing device, and executes the computer program while having access to at least some parts of the viewing device. Via the interface port connector assembly the video frames may be accessed by the software device.

Also, this embodiment allows for upgrading an existing viewing device with the computer program code such as to execute the method according to the invention.

The interface port connector assembly may be selected form the group consisting of USB, HDMI or other data transfer ports, particularly data transfer ports for display content data.

According to another embodiment of the invention, the input data is received at the viewing device via a repeatedly connectable receiver device that is connected to the viewing device via the interface port connector assembly, wherein the receiver device is configured to receive the input data, particularly wireless receive the input data, and to provide the input data to the computer program code, particularly wherein the receiver device and the software device are comprised in the same housing and particularly connected via the same port of the interface port connector assembly.

According to this embodiment, the software device not only hosts the computer program but is in essence also configured to receive and process the input data from the user interface. Therefore, the complete method according to the invention may be brought to a viewing device that may not have been configured to execute the method according to the invention but is upgraded for this purpose.

According to another embodiment of the invention, the proxy server comprises the processor or a portion of the processor system executing the computer program code, wherein the input data is transmitted to the proxy server and provided to the computer program code, wherein when the computer program code receives the selection request, the at least one key frame and particularly the video section is determined from the video stored on the proxy server.

This variation of the invention allows to execute the method according to the invention even on viewing devices that do not provide access to the video player application or via an interface port connector assembly. Here, the viewing device in essence solely serves the purpose to show the video to the user, wherein there is no communication between a receiver of the viewing device and the user interface. The input data is processed on the proxy server and the viewing device may not be part of this process. This embodiment offers the possibility to implement the method according to the invention on system that do not provide any interface for external devices or computer programs.

According to another embodiment of the invention, the user interface is connected to a transmission device that is configured to wirelessly transmit the input data. The transmission device may be included in the user interface, or the user interface and the transmission device may be comprised in a user device, such as a smartphone.

This embodiment specifies an embodiment for transmitting the input data, particularly when using smart device, such as a smartphone that typically comprises at least one transmission device.

According to another embodiment of the invention, the input data is transmitted to the receiver device via a wireless local network, particularly via a direct wireless connection between the receiver and the transmission device, particularly, wherein the wireless local network is also a WPAN (wireless personal area network) connection, such as a Bluetooth connection, particularly wherein the common clock is provided by the wireless local network or wherein the input time reference and the screening time reference remain unsynchronized, particularly wherein the input time reference is associated to a reception time that corresponds to the time when the input data has been received at the receiving device.

This embodiment allows for a wireless connection between the receiver and the user interface via specific transmission channels, which in turn may also be configured to provide the common time reference, e.g. the network time of the network that is used for transmitting the input data.

According to another embodiment of the invention, the input data comprises sentiment data comprising information on an instruction conveyed by the user to the user interface, wherein the sentiment data is relayed to a second computer program that is executed on a computer or a server, such as a transcription server, wherein the second computer program is configured to extract from the sentiment data the instruction.

The second computer program may be comprised in the computer program code as an extension of the capabilities of the computer program code.

Alternatively, the second computer program may be a separate and independent computer program that is configured to extract, translate/ transcribe and optionally tag the sentiment data.

According to another embodiment of the invention, the second computer program identifies an item comprised by at least one of the video frames comprised in the video section, and associates the instruction to the item, wherein the item is comprised by the group consisting of:
- a machine-readable code,
- a hyperlink,
- a website address,
- a telephone or fax number
- a sound signal.

According to another embodiment of the invention, the instruction associated to the item causes the second computer program to issue commands to a device or a system to execute an action comprised in the group of:
- execute the item,
- extract the item from the at least one video frame
- execute a set of prestored instructions related to the item.

This embodiment allows the further functionality connected to the user input to be executed in a user-convenient way. For example, in case the item is a QR-code coding an instruction to visit a website, the second computer program would cause the device or the system to visit said website.

Similarly, further or different instructions may be comprised in the item. Alternatively, for example in case the item comprises a telephone number, the second computer program would cause the device or the system to initiate a call using the telephone number. For this purpose, the device may comprise a telephone.

According to another embodiment of the invention, the input data is selected from the group consisting of: a gesture recorded by the interface, a vocal command recorded by the interface, a haptic interaction with the interface, a touch based gesture on a screen or button, a body sensor such as measuring pulse, blood flow, brain activity and body temperature, an eye focal plane measurement, a tongue based movement and pressure capture, clothing sensor for capturing movement and temperature, sensor for measuring corporal electrical fields, accessory devices such as a computer mouse, ball gaming control stick, stylus, ring on finger, wristband, headband and jewelry that capture motions in two or three dimensional spaces.

This embodiment is further detailing possible actions associated to the input data, particularly to the sentiment data. For receiving or reading the input data the user interface may be configured accordingly.

According to another embodiment of the invention, when the item is extracted, a second user input is received by the user interface, wherein the second user input specifies one or more actions executed on the extracted item, particularly wherein the extracted item is conveyed to the user, e.g. via the viewing device or the interface device.

A user watching a video on the TV may want to select a video section that is on display. The invention allows to select such a video section by providing the user input received at the user interface and to cause the computer program code to identify said video section based on the user input. Particularly, the input data are not directly sent to the viewing device but are received first at a server or an external receiving device that may be plugged in the viewing device by means of a connector interface.

The video player application may be comprised by the viewing device. However, typically such video player application may not comprise the computer program code according to the invention,

The viewing device may comprise a display or a display system on which the video is displayed.

The invention may be at least partially computer-implemented, wherein user input is provided to the computer-implemented method by means of the user interface. Further, the computer implement method may be configured to control communication devices such as receivers to receive and send computer instructions to execute the method steps.

### Figure Description and exemplary embodiments

Particularly, exemplary embodiments are described below in conjunction with the Figures. The Figures are appended to the claims and are accompanied by text explaining individual features of the shown embodiments and aspects of the present invention. Each individual feature shown in the Figures and/or mentioned in said text of the Figures may be incorporated (also in an isolated fashion) into a claim relating to the device according to the present invention.

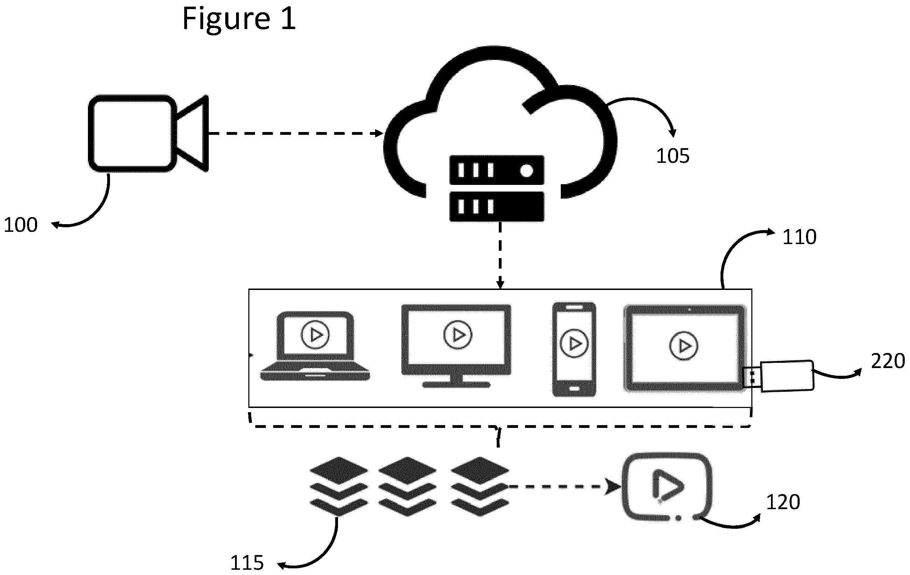

Referring to Figure 1, a recording device 100 at the event captures live video and feeds it to a broadcast server or streaming server 105 which can transcode the content for broadcast, streaming or multicasting to a plurality of viewing end points 110 each comprising a viewing device; a viewing device may be comprised by or may be a personal computing device, a television, a monitor, a smartphone and/or a tablet. The viewing end point 110 take the signal or stream of the video content and bring it into a memory device, such as a buffer 115 before assembling the packetized content through a video player application, also referred to as video processing application 120 in the current specification, onto the viewing device 110. Video player application is resident on the viewing device by virtue of having been loaded to the viewing device or connected via an external universal serial bus (USB) device 220, also referred to as a dongle. In the current method of streaming multicast and broadcast live content the connecting arrows represent a conveyance of content packets, signals or both and introduces delay and loss of time synchronization for the video from the time of recording to the time of viewing/time of display.

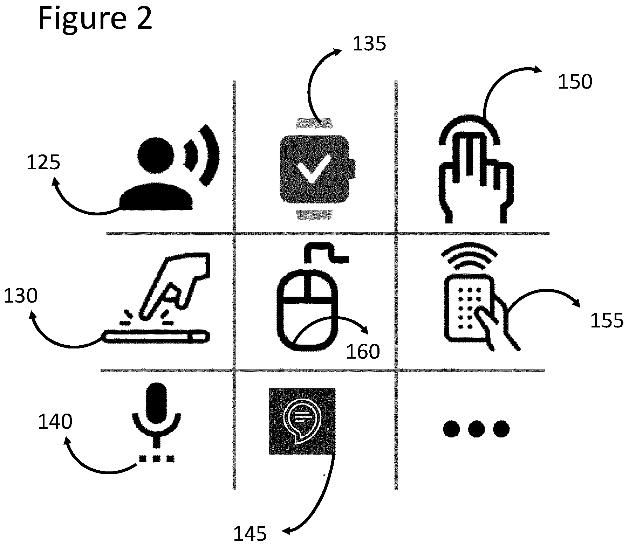

In the various embodiments of the current invention, the disclosure of a system and method to understand, address and compensate for delays in transmission of video content from inception of the event recording to the viewing by an audience will subsequently enable the registration of viewer sentiment input through a variety of user interfaces detailed in Figure 2. The term user sentiment particularly refers to a sentiment data that encode for a user instruction, wherein the instruction may be issued in various forms. The sentiment data may be comprised by the input data.

Viewer sentiment may be captured via ambient voice 125 keyword and emotion tracking, wherein the microphone of the user is enabled at time of registration to turn on when an application command is given to a personal device which may be a viewing device 110 of the video stream or another device associated to a viewer 165. A User interface 170 capturing viewer sentiment can include tactical response 130 such as employed via a smartphone or smartwatch 135, wherein the viewer may be offered a selection of buttons for expressing a specific sentiment such as sharing video content, buying or bidding on items or services advertised in the video, as well as liking a segment of the video. An audio button 140 may also be triggered by the viewer on a PC or smartphone to invoke voice commands to register sentiment data. An audio button 140 may trigger an analysis of the voice prompts for converting to text or digital command, or alternately convey said voice prompts to a cloud system 175 for conversion to text or digital command, additionally the audio command may be directed to a voice assistant 145 for subsequent conversion to text for initiation of local device or cloud workflows. The user device associated to a viewer 170 may additionally or alternatively comprise a camera or other image sensor such as radar, Lidar, etc and may further be configured to convey instructions from hand, facial or other physical gestures 150 in form of user and/or sentiment data, when a hand or other body part is presented to the camera or image sensor. The user interface 170 may also be employed to convey instructions by utilizing a movement sensor 155 on a smartphone, smartwatch 135, fitness bracelet, or gaming control stick, and/or television remote control, which often employ accelerometers or gyroscopes to understand spatial movement. Finally, a computer mouse 160 can be employed as a user interface 170 for sentiment capture when connected to a personal computing device.

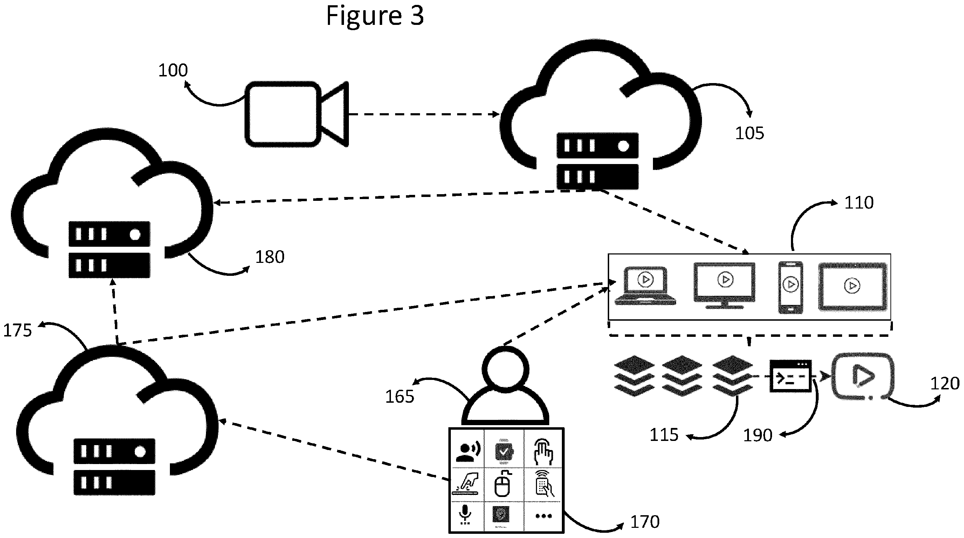

In an exemplary embodiment of the invention, depicted in Figure 3, the effective capture of viewer sentiment through the user interface 170 for example during a memorable moment viewed on streamed video content is accomplished through voice interfaces 125, 145 and 140 or gesture interfaces 150 and 155. The user interface may be comprised by a viewer-associated device that a viewer 165 may have proximate, such as a smartphone, smartwatch, PC or household voice enabled digital assistant, such as Alexa, Google orSiri. In an embodiment of the current invention, the TV, tablet or PC acting as the viewing device 110 may also capture the viewer sentiment via voice or gesture enabled user interface, as well as through an associated remote control or a gaming device with haptic response.

Once the viewers' sentiment is captured through the user interface 170 that may be independent of the viewing device 110 or incorporated into the viewing device 110, the sentiment is translated by the user interface 170 into input and/or sentiment data, such as text or a digital message or conveyed to a cloud sentiment transcription and tagging server 175 for conversion to a digital message with associated metadata about the viewer 165, time and location of the expressed sentiment. Transcription may be executed by a second computer program. As an example, in a preferred embodiment, a viewer 165 speaks to their digital assistant via a smartwatch 135, saying: "Fansy <keyword identifying the service> share <keyword for action> Messi's Goal <metadata tag for viewed action> with John Smith <name for viewer's address book lookup>". When a sentiment as audio input 125 is registered and processed on the user interface 170 or in the cloud transcription service 175, the audio or gesture cue expressed to the user interface 170 is transformed into a digital message and sent to the viewing device 110 or the cloud content proxy server 180. In an embodiment of the present invention computer program code 190 on the viewing device 110 takes the last several seconds of video from the buffer 115 and creates a video segment as a file that can be shared with the viewer 165, other individuals or via social media platforms. In a further embodiment of the current invention, the association of a viewer 165 to a streamed event can initiate a virtual session on behalf of the viewer 165 in a cloud content proxy server 180, that streams content from the streaming or broadcast video server 105, and may store or cache video content for short durations awaiting a viewer's 165 sentiment message as expressed by the user interface 170 and translated at the user interface 170 or the cloud transcription server 175 into a digital message or text. The cloud content proxy 180, after receiving the sentiment message from the user interface 170 or the cloud transcription server 175 can access cached video via the programming code 190 on the viewing device or content proxy server 180 and extract a video segment related to the user's sentiment and time synchronized from the viewer's sentiment user interface 170 and the viewer's video application 120 on the local viewing device 110 or the video on the content proxy server 180..

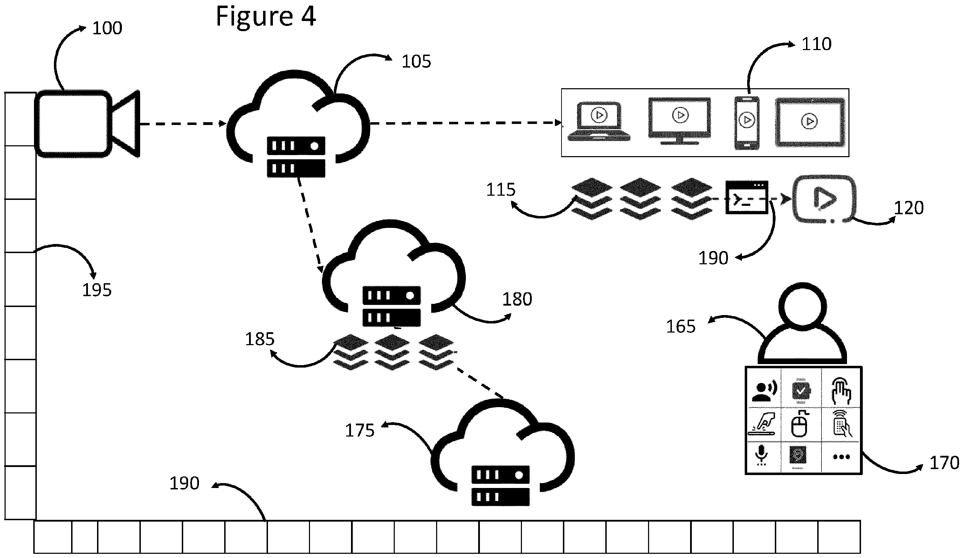

The embodiments of the current invention teach three methods, illustrated in Figure 4, for capturing viewer 165 sentiment via a user interface 170 and connecting the sentiment to a segment of video for delivering services and capabilities for viewers 165 across public, multiparty viewing devices 110. The three methods taught in the current invention can be compared in terms of a time measurement 190 which identifies the content viewing time on a viewing device 110 as displaced from the time of recording the event on a recording device 100. The methods taught in the current invention may also be understood in terms of a level of computing and system integration effort measurement 195 which illustrates more effort required to link sentiment to video content as the sentiment cues, video content and messages are distributed and integrated across systems outside the main content flow of recording device 100 to broadcast and streaming server 105 to viewing devices 110. The methods for connecting viewer sentiment to video content are:
1) Transforming video content from stream buffer 115 using digital packet information of the video player application 120 of the viewing device 110, wherein said information is determined by the program code 190 with ability to utilize the buffer 115 separate of the video player application 120 on the viewing device 110.
2) Capturing an image also referred to as a screen shot of the video content from the video player application 120 on the viewing device 110 and searching and comparing the screenshot to video images in the cloud content proxy server 180 buffered cache 185, and
3) Utilizing the cloud content proxy server 180 for the video packet and timestamp information capture and transmitting the viewer sentiment cue to the cloud content server 180 from the cloud sentiment tagging server 175 fed a digital message from the sentiment cue user interface 170 utilized by the viewer 165.

The three methods of the current embodiment offer varying levels of specificity and effort to identify the video segments of interest to the viewer 165 from the video content on the viewing device 110. Each embodiment also represents varying degrees of effort measurement 195 required in system interactions to accomplish effective sentiment cue to video content synchronization. The various embodiments may utilize a suitable timestamp triangulation method, particularly the method as taught in EP 3306495 A1, and extended to streaming video content in the current disclosure.

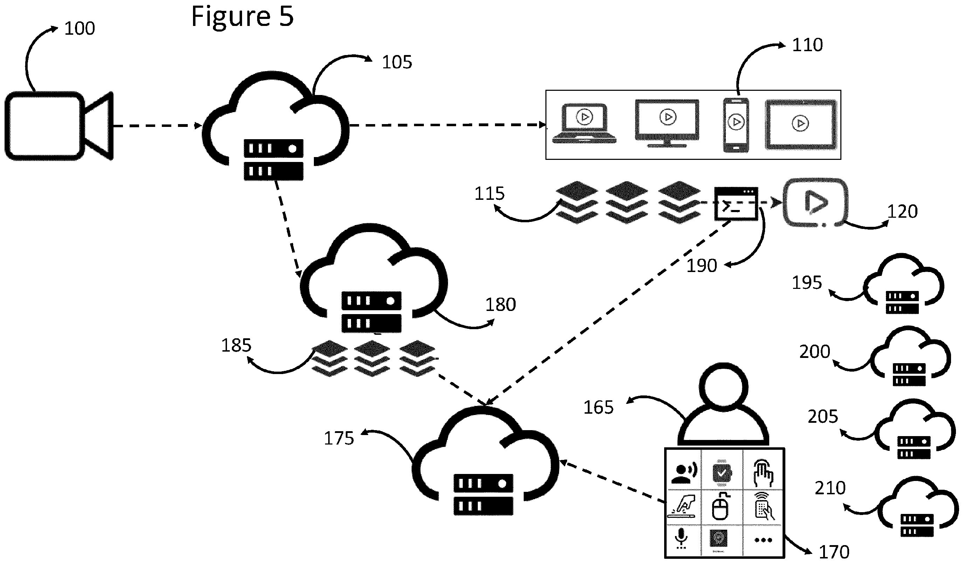

An embodiment of the invention according to a first variant is illustrated in Figure 5 as follows:
In order to select a video segment of interest to the viewer 165 from buffer 115 of the video player comprising the video player application 120 on the viewing device 110, the program code 190 is packaged into said video player application 120 or placed in a position to view the buffer 115 of the video player. The program code 190 receives an application programming interface (API) call from the cloud sentiment transcription and tagging server 175 or directly from the user interface 170 as expressed by the viewer 165. The API call from the sentiment transcription tagging server 175 or sentiment user interface 170 obtains a universal network time stamp for the sentiment message when it is registered on the sentiment transcription and tagging server 175 or from the user interface 170 as it is time calibrated to a universal network time through a separate calibration process conducted multiple times per day to ensure the difference between a server or user interface time and a universal network time is logged multiple times per day. The program code 190 running in or parallel to the video player application 120 compares the video playing elapsed time on the screen with the UDP packets in the video buffer 115 to identify an offset time lag of buffer packets 115 tied to the universal network time and the packets viewed on the player 120. The program code 190 chooses the UDP packets that represent the video segment start time that most closely coincides with the viewer 165 sentiment expressed through the user interface 170 time as measured by the network time calibration, and pulls from cache a specified time period of packets in buffer 115, as an example 15 seconds back from of sentiment cue capture time for a typical highlight duration. The program code 190 then assembles the video segment from buffer 115 into an MP4 or other lightweight video format for sharing. Additionally, the program code 190 can initiate machine learning models to identify QR codes, URLs, telephone numbers in the video frames comprising or the same in audio corresponding to the video frames in the video section in order to initiate a call to a commerce server 195 for purchases, to an auction server 200 to start an auction; to a social media platform 205 to post a link; to a storage server 210 to share content or links to content from the actions a viewer 165 is eligible to take.

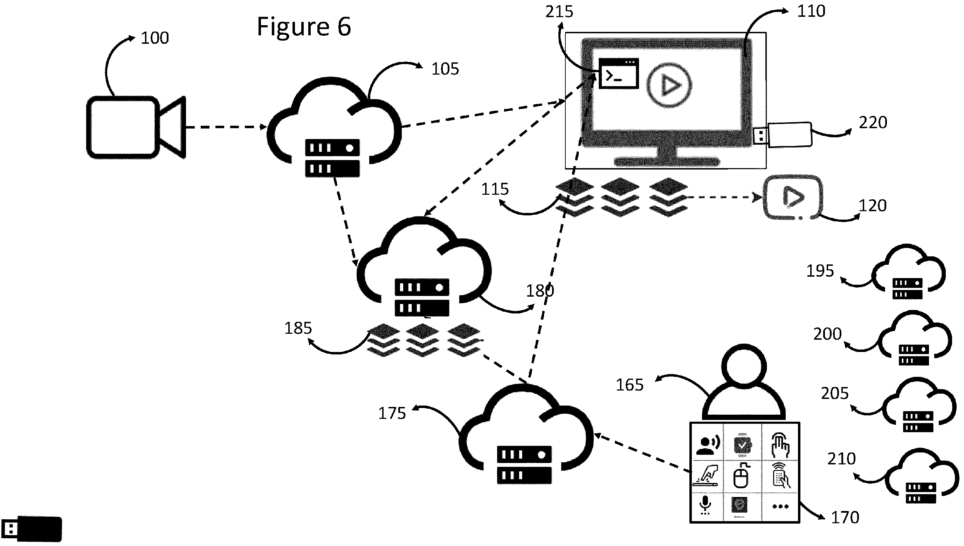

A further embodiment of the current invention, depicted in Figure 6, utilizes the program code 215 on the viewing device 110 or USB or HDMI connected application dongle 220, rather than having it located at the video player application 120. According to this embodiment, the program code is configured to capture an image of the screen of the viewing device or buffer of video content on the viewing device 110 where the video is being viewed. The program code 215 or the application dongle 220 reads UDP packet as well as any other transmission protocol timestamps to temporally identify the content on the screen of the viewing device 110. The user interface 170, providing the sentiment cue as input data from audio 125, gesture 150, tactile 130 or haptic 155 interfaces, sends a message to the computer program 215 on the viewing device 110, which may be any device accepting application code, such as: a PC, TV, smartphone or Tablet. The sentiment message comprised in the sentiment data may be directly conveyed from the user interface 170 or via the sentiment transcription and tagging server 175. In the event that the cloud content proxy server 180 is utilized, the program code 215 or the application dongle 220 captures a screenshot of the video frame from buffer 115 for subsequent comparison to the video stream on the proxy content server 180 as well as using the UDP packets of the streaming video corresponding to the sentiment cue's timestamp. The screen shot image is conveyed to the content proxy server 180 and compared to the same stream being captured in buffer 185 of the content proxy server 180. In the content proxy server 180 the image is identified as the sentiment initiation point and subsequently a set of frames going back a specified number of seconds is extracted and packaged into a video segment for a video highlight that is then made available to the viewer 165 whose sentiment cue, i.e. the input data 170 initiated the video segment creation. Video content images and corresponding audio associated with the video segment identified by the sentiment cue timestamp may also be extracted for machine analysis to identify visual prompts such as a QR code, URL, telephone, etc. to initiate a purchase for a product or service mentioned in a video or audio announcement during the extracted segment. A QR code embedded in the image may be extracted to use for linking the viewer 165 to a subscription or other service. The association of an expressed sentiment through the user interface 170 by the viewer 165 will initiate a video or audio ingestion by the program code 215, application dongle 220 or application code 190 to extract meaning from the video image or audio accompanying the video to offer highlight, share, buy, bid, subscribe, like and other services familiar to users of common web interfaces, with the additional benefit to users of the current invention wherein the viewer 165 need not take their eyes from the video content of the screen to initiate a service driven by the user interface 170.

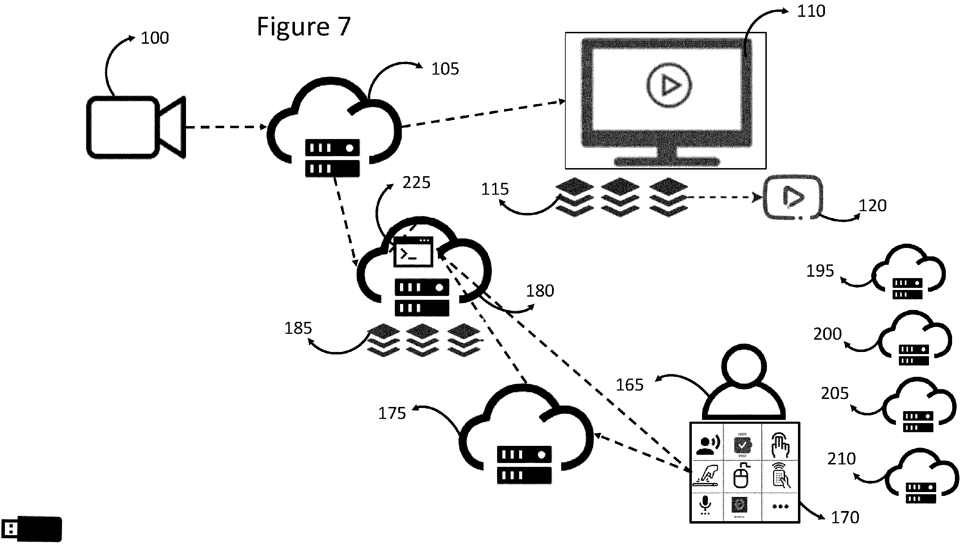

In a third exemplary embodiment of the current invention illustrated in Figure 7, the user interface 170 receiving an audio, gesture or tactile cue from the viewer 165 sends the sentiment cue, i.e. the input data to the sentiment transcription and tagging server 175 or directly to the content proxy server 180 capturing the video stream and serving as a real time proxy for the viewing device 110, when the program code 190, 215 cannot be placed at or loaded on the viewing device 110. The sentiment message reaches the content proxy server 180 directly from the user interface 170 or by way of the sentiment transcription and tagging server 175 and the content proxy server 180 utilizes the computer code 225 to take video from its buffer 185 to build a video or audio segment to provide back to the viewer 165 in the case of a highlight, or as another action in the case of using a visual cue such as a QR code in the video image or an audio announcement corresponding to the video segment in order to initiate a service. In this embodiment the program code is located on the proxy server 180. Providing for the potential difference in the video time lapse on the viewing device 110 as compared to a cloud content proxy server 180, there will need to be a larger window of video and audio capture. Aside from increasing the video segment, there are compensatory techniques which would enable the system of the current invention to more finely identify the video segment the viewer 165 reacted to via the user interface 170 and thus would want to have access to in a shortened video segment. As an example, during the video stream to the viewing device 110, a QR code may be flashed on the screen so that the viewer 165 may take a snapshot of the code whose link would activate and synchronize the viewer's 165 sentiment user interface 170 to capture the timing of the video being displayed. The registration of the QR code from the video stream via a viewing device 110 that the viewer 165 utilizes for the sentiment user interface 170 would inform the content proxy server 180 of the network time of the video stream and the network time from the viewing device 110 capturing and conveying the QR code. The content proxy server's 180 buffer 185 can then be adjusted to simulate the delay for the viewer 165 watching the video at the viewing device 110 as compared to the content proxy server 180 buffer 185 of the same video content. A further method to synchronize a cloud content proxy server 180 to the video stream at the viewing device 110 would be to use an audio cue such as a tone or keyword to be delivered over the audio of the streamed content and allow a viewer 165 user interface 170 to actively listen for the audio cue and send a message to the content proxy server 180 for calibration of the video stream depicted at the viewing device 110 as compared to the video stream received by the content proxy server 180.

Further to the utility of the current invention is the ability to create a nonfungible token (NFT) of each video segment. The NFT may be created for a limited number of copies; 1 to some finite number. With an NFT the user can own the video segment rights in part or in whole, preventing the retransmission across digital platforms without consent. In the preferred embodiment, a protected video segment would be created using an NFT platform. Figure 6 conveys the methods and systems taught in the current invention with the additional capability for an auction server 200 engaging multiple viewers 165 expressing a sentiment via their respective sentiment user interfaces 170 for the same video segment to be able to bid for the ownership of the NFT which may include rights over future retransmission of the video segment content. In an event recording device 100 where multiple camera angles are utilized, the multiple recording devices 100 may be synchronized via the methods described in the original Sufuentes/Tankoua patent as well as the subsequent disclosures for streaming content in the preferred embodiment of the current invention can be utilized to identify the same time stamped video segment across multiple camera angles, and thus consolidate multiple video streams into a single NFT or video segment.

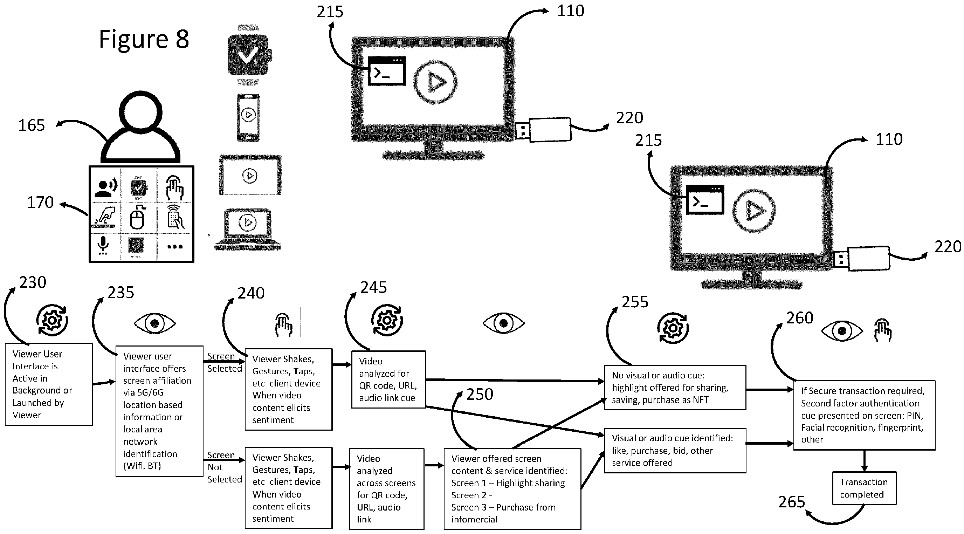

In the preferred embodiment of the current invention, as depicted in Figure 8, the viewer 165 experience would be optimized to have minimal loss of line of sight to the video content on the viewing device 110, even as the user interface 170 for recording sentiment and prompting actions would engage the viewer 165 as necessary to confirm viewing device 110, in the case where multiple viewing devices are present and services in the case that additional input via the user interface 170 is required for more secure transactions. In an initial system step 230 the user interface 170 would be active as the viewer entered a viewing venue, such as a bar, restaurant, public area, home, etc. with one or multiple viewing devices 110. In a device affiliation stage 235 the user interface 170 would alert to an offer to identify nearby viewing devices 110 using location-based services for known devices or locally announced viewing devices 110 by employing Wi-Fi or Bluetooth to announce their presence and content to the user interface 170 in range of the viewing device 110. Whether the viewer 165 chooses to affiliate to a viewing device or not, the viewer may gesture during a sentiment expression stage 240 through the user interface when the viewer sees video content of interest on the viewing device 110. In the sentiment expression stage 240 if a viewing device 110 was not selected, the user interface 170 will prompt the viewer 165 to select the viewing device 110 of interest by offering multiple snapshots of the content at the time of sentiment cue capture so that the viewer 165 may then select the viewing device 110 and content of interest. If a viewing device 110 was initially selected and there are multiple viewing devices in the venue, the viewer will be able to select a different viewing device and maintain the sentiment cue timestamp across multiple viewing devices 110. After the sentiment expression stage 240, the computer program code 190, 215, 220, on the viewing device 110 and/or the programming code 225 on the proxy server 180 analyze the video segment for visual and audio cues that may link to an external service or package the video segment for sharing with friends on social media, etc. In the event that the video segment may have the video signature of both a highlight (goal, basket, home run, touchdown, etc.) as well as a visual cue such as URL to follow for liking a play, commenting to social media or purchasing the play as an NFT, the viewer 165 is provided a choice of service offered on the user interface 170 in the service selection stage 250 of the viewer experience optimized workflow. In the service execution stage 255 the system executes the desired service as designated by the viewer 165 via the user interface 170. In the case of further secure transaction requirements a second factor authentication stage 260 is optional for the viewer to provide a PIN, gesture, facial or fingerprint recognition for transaction completion. In the optimal flow the viewer 165 need only have one visual encounter with the user interface 170 to initiate a basic service, thus optimizing the viewer 165 viewing experience with the content.

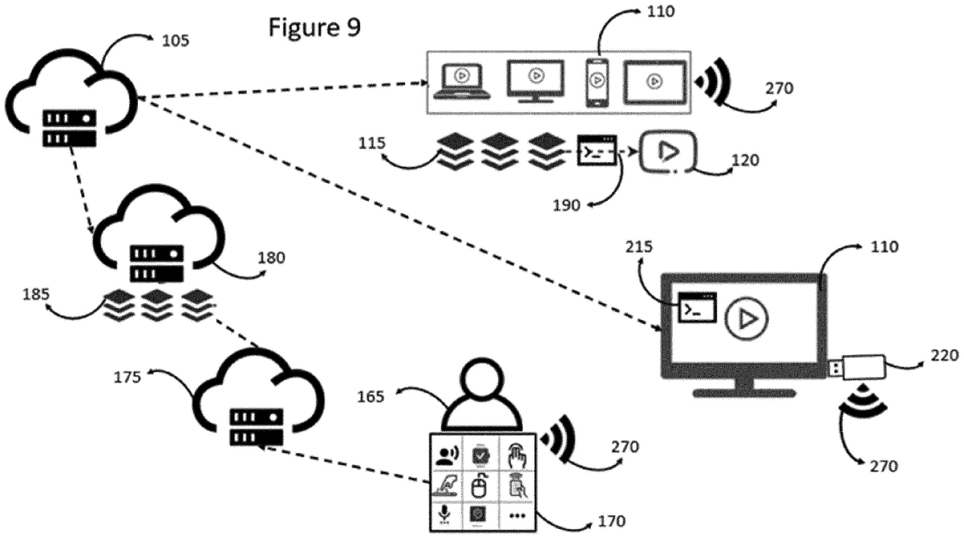

In the preferred embodiment of the present invention illustrated in Fig 9, time synchronization between the sentiment cue, i.e. the user input, captured by the user interface 170 and the video content in the buffer 115 of viewing device 110 may occur on the computer program code 190, 215 - particularly independently from its location, e.g. at the video player application 120, on the viewing device 110 or on the software device 220, wherein the viewing device 110 is configured to access or create a local area network 270 between the viewing device 110 and the user interface 170, wherein the local area network 270 is for example selected form the group consisting of Wifi, Bluetooth or another readily available wireless technology. When a local area network is not readily available, a wide area network represented by the dashed arrows interacting between systems in Fig 9, can be employed to communicate between server systems viewing devices and user interfaces. Examples of wide area networking technologies utilized to link server systems and devices include, but are not limited to: ethernet, fiber networks, 5G/6G wireless, cable broadband, DSL, satellite and many other readily available connectivity models. When a wide area network is employed for video content to sentiment cue synchronization, triangulation of the viewing device 110 time, and the subsequent buffer 115 of the video packets, which could be UDP packets as well as other readily available transmission protocols, or broadcast video frames to the sentiment cue registered by the user interface 170 at the sentiment transcription server 175 is accomplished through the capture of a network time on a server system, such as the sentiment transcription server 175, which registers the offset time of the user interface 175 from a universal network time and can convey the offset to the programming code. The viewing device 110 may also have a device time which diverges from a universal network time and the sentiment transcription server 175 may catalog the viewing device 110 offsets from the universal network time in order to synchronize the sentiment timestamp, i.e. the input time reference, for the packets and subsequent video frames to associate to the sentiment expressed by the viewer 165. Where a viewing device 110 is not able to load programming code, a cloud content proxy server 180 may be used to buffer 185 the video content being viewed by a viewer 165 on the viewing device 110. When a content proxy server 180 is employed, the sentiment message, i.e. the input data / sentiment data is conveyed from the user interface 170 to a sentiment transcription server 175, and on to the content proxy server 180 to associate the sentiment to the video content in the buffer 185 of the content proxy server 180. In an embodiment of the present invention the sentiment transcription server 175 and the content proxy server 180 may reside on the same server system or in the same server application. In an embodiment of the present invention wherein the sentiment message and video content are synchronized on cloud server systems, the triangulation to a network time is performed at the sentiment transcription server 175 or the content proxy server 180, and a user interface 170 offset time from the universal network time is calculated by the server system receiving the sentiment message from the user interface 170.

### References

EP 3306495 A1

## Claims

1. A method for selection of a video section in a video stream comprising the following steps:
- transmitting a video to a viewing device,
- receiving and buffering video frames of the video on a memory device of a viewing device (110),
- streaming a video from the memory device via a video player application (120) to the viewing device (110) that displays the video, wherein the video player application (120) is configured to read out the video frames of the video from the memory device (115) and to cause the viewing device (110) to display the video frames of the video,
- receiving a user input on a user interface (170) at a selection time, wherein the user input is processed such that input data comprising a selection request and an input time reference is generated,
- transmitting the input data to a processor or a processor system executing computer program code (190, 215, 225), configured
e) to record and associate for each video frame a screening time reference, indicative of a time when the video frame has been on display on the viewing device;
f) upon receiving the selection request, to determine at least one key video frame that has been displayed on the viewing device at the selection time by determining the video frame associated to the screening time reference that is closest to the input time reference,
g) to select a video section comprising a plurality of video frames preceding and/or following the at least one key video frame, such that the video section corresponds to a video section that has been displayed on the viewing device in a time interval comprising the selection time,
h) to generate a separate video file comprising from the video only the selected video section.

2. The method according to claim 1, wherein for determining the at least one key video frame, the screening time reference and the input time reference are synchronized and/or related to a time of a common clock, such that an offset between a time of a clock providing the screening time reference and a time of a clock providing the input time reference is accounted for in step b) of the method.

3. The method according to any of the preceding claims, wherein the video is also stored on a proxy server (180), particularly wherein the proxy server (180) transmits the video to another server and/or the viewing device (110).

4. The method according to one of the claims 1 to 3, wherein the computer program code (190) is comprised by and/or has access to the video player application (120), wherein the computer program code (190) determines a processing time reference for each video frame, wherein the processing time reference corresponds to a time at which the video player application (120) processes the video frame for display and wherein the computer program code (190) assigns said processing time reference to the screening time reference.

5. The method according to any of the claims 1 to 3, wherein the computer program code (215) is comprised by the viewing device (110) and/or has access to a display or a graphic processing unit of the viewing device (110), wherein the computer program code (215) determines the video frame that is currently on display of the viewing device (110).

6. The method according to claim 5, wherein the computer program code (215) determines a display time reference for each video frame, wherein the display time reference corresponds to a time at which the video frame has been on display and wherein the computer program code (215) assigns said display time reference to the screening time reference.

7. The method according to claim 3 and claim 5 or 6, wherein the computer program code (215) transmits the video frame on display to the proxy server (180), wherein on the proxy server (180) the video frame on display transmitted by the computer program code (215) is identified in the video stored on the proxy server (180), wherein from the video stored on the proxy server (180) the at least one key frame as well as the video section is determined.

8. The method according to one of the claims 5 to 7, wherein the computer program code (215) is stored and executed on a repeatedly connectable software device (220) comprising the processor or a portion of the processor system, wherein the software device (220) is connected to the viewing device (110) via an interface port connector assembly, and/or wherein the viewing device (110) comprises the processor or a portion of the processor system.

9. The method according to one of the preceding claims, wherein the input data is received at the viewing device (110) via a repeatedly connectable receiver device (220) that is connected to the viewing device (110) via the interface port connector assembly, wherein the receiver device (220) is configured to receive the input data, and to provide the input data to the computer program code (215).

10. The method according to claims 3, wherein the proxy server comprises the processor or a portion of the processor system executing the computer program code (225), wherein the input data is transmitted to the proxy server (180) and provided to the computer program code (225), wherein when the computer program code (225) receives the selection request, the at least one key frame is determined from the video stored on the proxy server (180).

11. The method according to any of the preceding claims, wherein the user interface (170) is connected to a transmission device that is configured to wirelessly transmit the input data.

12. The method according to at least claim 9, wherein the input data is transmitted to the receiver device (220) via a wireless local network, particularly via a direct wireless connection between the receiver and the transmission device, particularly, wherein the wireless local network is a WPAN or WLAN connection, such as a Bluetooth or Wi-Fi connection, particularly wherein the common clock is provided by the wireless local network or wherein the input time reference and the screening time reference remain unsynchronized, particularly wherein the input time reference is associated to a reception time that corresponds to the time when the input data has been received at the receiving device.

13. The method according to any of the preceding claims, wherein the input data comprises sentiment data comprising information on an instruction conveyed by the user to the user interface (170), wherein the sentiment data is relayed to a second computer program that is executed on a computer or a server (175), such as a transcription server (175), wherein the second computer program is configured to extract from the sentiment data the instruction.

14. The method according to claim 13, wherein the second computer program identifies an item comprised by at least one of the video frames comprised in the video section, and associates the instruction to the item, wherein the item is comprised by the group consisting of:
- a machine-readable code,
- a hyperlink,
- a website address,
- a telephone or fax number
- a sound signal.

15. The method according to 14, wherein the instruction associated to the item causes the second computer program to issue commands to a device or a system to execute an action comprised in the group of:
- execute the item,
- extract the item from the at least one video frame
- execute a set of prestored instructions related to the item.
